# EUROPEAN PATENT SPECIFICATION

(11) **EP 4 525 161 B1**
(45) Date of publication and mention of the grant of the patent: **11.11.2026**
(21) Application number: 23907694.6
(22) Date of filing: 19.12.2023
(51) Int. Cl.: H01M 50/258, H01M 50/284, H01M 50/512, H01M 50/209, H01M 50/247, H01M 50/213, H01M 50/503, H01M 50/296, H01M 10/42

(54) **MODULAR BATTERY PACK**
MODULARER BATTERIESATZ
BLOC-BATTERIE MODULAIRE

(30) Priority: 22.12.2022 KR 20220182120
(43) Date of publication of application: 19.03.2025
(73) Proprietor: LG Energy Solution, Ltd., Seoul 07335 (KR)
(72) Inventor: HWANG, Seong Ju, Daejeon 34122 (KR)
(74) Representative: Plasseraud IP
(86) International application number: PCT/KR2023/021017
(87) International publication number: WO 2024/136411

(56) References cited:
- EP-B1- 3 475 998
- WO-A2-2014/054874
- CN-A- 112 356 733
- KR-A- 20150 115 250
- KR-A- 20220 094 040
- US-A1- 2020 044 212

## Description

### [Technical Field]

This application claims the benefit of priority to Korean Patent Application No. 2022-0182120 filed on December 22, 2022.

The present invention relates to a modular battery pack. More particularly, the present invention relates to a modular battery pack that can be assembled and used in different sizes and capacities without the need to manufacture new dies and molds.

### [Background Art]

A battery pack including a lithium secondary battery is used as a power tool in a variety of applications, and the number of battery cells constituting the battery pack may be changed depending on the required capacity and output. Depending on the number of battery cells, a housing configured to receive the battery cells may be changed, making it substantially difficult to change the number of battery cells as initially designed.

Patent Document 1 relates to a battery device for vehicles including a basic battery pack that is basically mounted in a vehicle and an auxiliary battery pack that may be optionally mounted in the vehicle, wherein each of the basic battery pack and the auxiliary battery pack includes a plurality of battery cells, the plurality of battery cells being connected to each other in series and/or parallel.

The auxiliary battery pack may be further connected to the basic battery pack in order to increase electrical energy of the vehicle. In addition, the auxiliary battery pack may be connected to the basic battery pack in series via at least one junction box, which makes it easy and reliable to further mount the auxiliary battery pack to the basic battery pack.

Patent Document 1 discloses a configuration and method for connecting and using a single auxiliary battery pack to a basic battery pack, but does not disclose technology for further coupling and using additional auxiliary battery packs.

Patent Document 2 relates to a battery including two or more battery modules, wherein each of the battery modules includes a plurality of battery cells electrically connected to each other in series and/or parallel, a positive electrode tab and a first module connection member are connected to each other in an electrically conductive manner, a negative electrode tab and a second module connection member are connected to each other in an electrically conductive manner, a module connection member of the first battery module and a module connection member of the second battery module are connected to each other in an electrically conductive manner, and the module connection members are electrically conductively connected to each other through plug connection.

Patent Document 2 discloses a configuration in which a first module connection member of the first battery module and a first module connection member of the second battery module are connected to each other in an electrically conductive manner, or a second module connection member of the first battery module and a second module connection member of the second battery module are connected to each other in an electrically conductive manner, but does not disclose a configuration in which three or more battery modules are connected to each other.

Conventionally, as described above, methods of increasing additional capacity only to a limited extent were proposed. Technology capable of providing battery packs of various sizes and capacities in an easy, simple, and economical manner has not yet been proposed.

### (Prior Art Documents)

(Patent Document 1) Korean Patent Application Publication No. 2017-0053071 (2017.05.15)
(Patent Document 2) Korean Patent Application Publication No. 2018-0124090 (2018.11.20)
Example of background art is the document EP3475998 B1.

### [Disclosure]

### [Technical Problem]

The present invention has been made in view of the above problems, and it is an object of the present invention to provide a new modular battery pack capable of easily increasing or decreasing the capacity of the battery pack and reducing manufacturing costs of dies and molds while reducing the number of parts.

### [Technical Solution]

In order to accomplish the above object, the present invention provides a modular battery pack including a base pack having received therein two or more cylindrical battery cells connected to each other in series, the base pack configured in a cuboidal shape overall, and at least one add-on pack having received therein two or more cylindrical battery cells connected to each other in series, the add-on pack configured in a cuboidal shape overall, wherein the two or more cylindrical battery cells are disposed side by side in parallel in each of the base pack and the add-on pack, the base pack and the add-on pack are disposed such that side surfaces of the two or more cylindrical battery cells face each other, and the base pack and the add-on pack are connected to each other in parallel.

The base pack may include a battery pack connector configured to function as a terminal of an entirety of the modular battery pack and a BMS configured to manage the entirety of the modular battery pack.

Each of the base pack and the add-on pack may include a first surface and a second surface configured to face the side surfaces of the two or more cylindrical battery cells therein, the battery pack connector and the BMS may be disposed at the first surface of the base pack while the first surface of the add-on pack may be disposed so as to face the second surface of the base pack, and when two or more add-on packs are connected, the two or more add-on packs may be stacked such that a first surface of an additional add-on pack faces the second surface of the add-on pack which is already disposed.

Coupling terminals for electrical parallel connection of the base pack and the add-on pack may be disposed at the second surface of the base pack, and at the first surface and the second surface of the add-on pack.

Fixing portions for physical coupling of the base pack and the add-on pack may be disposed at the second surface of the base pack, and at the first surface and second surface of the add-on pack.

The base pack and the add-on pack may be physically coupled to each other via the coupling terminals.

Each of the coupling terminals may have at least one of a plate-shaped structure, a leaf spring shape, a ring spring shape, and a blade-clip shape.

The two or more cylindrical battery cells may be disposed in parallel in each of the base pack and the add-on pack, and adjacent cylindrical battery cells of the two or more cylindrical battery cells may be disposed such that cap assemblies thereof face in opposite directions.

A number of the two or more cylindrical battery cells received in the base pack and the number of the two or more cylindrical battery cells received in the add-on pack may be equal to each other.

The two or more cylindrical battery cells received in each of the base pack and the add-on pack may be connected to each other in series via a busbar.

One end of the busbar coupled to electrode terminals of the two or more cylindrical battery cells may be bent so as to extend through a pack case of each of the base pack and the add-on pack.

A plurality of add-on packs may be coupled to the second surface of the base pack in a parallel connection, and the plurality of add-on packs may be coupled to each other in a parallel connection.

In addition, the present invention may provide various combinations of the above solving means.

### [Advantageous Effects]

As is apparent from the above description, a modular battery pack according to the present invention is configured such that a plurality of add-on packs can be coupled to a single base pack, whereby it is possible to provide a battery pack having a desired capacity through simple assembly.

Since one base pack and add-on packs having a certain shape are provided, it is possible to reduce the number of parts and reduce manufacturing costs of dies and molds.

The base pack and the add-on pack are connected to each other in parallel, and the add-on packs are connected to each other in parallel, whereby separation therebetween may be easily achieved even during use.

### [Description of Drawings]

FIG. 1 is a perspective view of a modular battery pack according to the present invention.
FIG. 2 is a perspective view of a modular battery pack according to a first embodiment with a case of a base pack removed.
FIG. 3 is a perspective view of an add-on pack in the modular battery pack according to the first embodiment.
FIG. 4 is an exploded perspective view of a modular battery pack according to a second embodiment.
FIG. 5 is an exploded perspective view showing coupling terminals of the base pack and the add-on pack according to the first embodiment.
FIG. 6 is a circuit diagram of the modular battery pack according to the first embodiment.
FIG. 7 is a see-through sectional view in direction A of FIG. 4.
FIG. 8 is a perspective view of a modular battery pack according to a third embodiment with a case of a base pack removed.
FIG. 9 is a perspective view of an add-on pack in the modular battery pack according to the third embodiment.
FIG. 10 is an exploded see-through perspective view of a modular battery pack according to a fourth embodiment.
FIG. 11 is an exploded see-through perspective view showing coupling terminals of the base pack and the add-on pack according to the fourth embodiment.
FIG. 12 is a circuit diagram of the modular battery pack according to the fourth embodiment.
FIG. 13 is a see-through sectional view in direction A of FIG. 10.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Embodiments of the present invention will be described in detail with reference to the drawings.

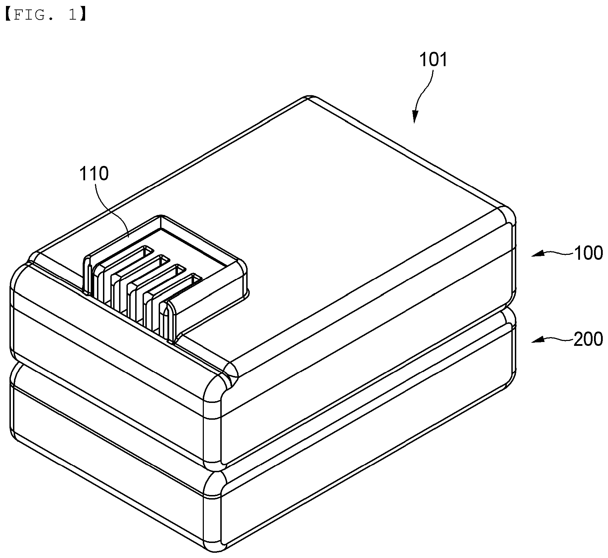

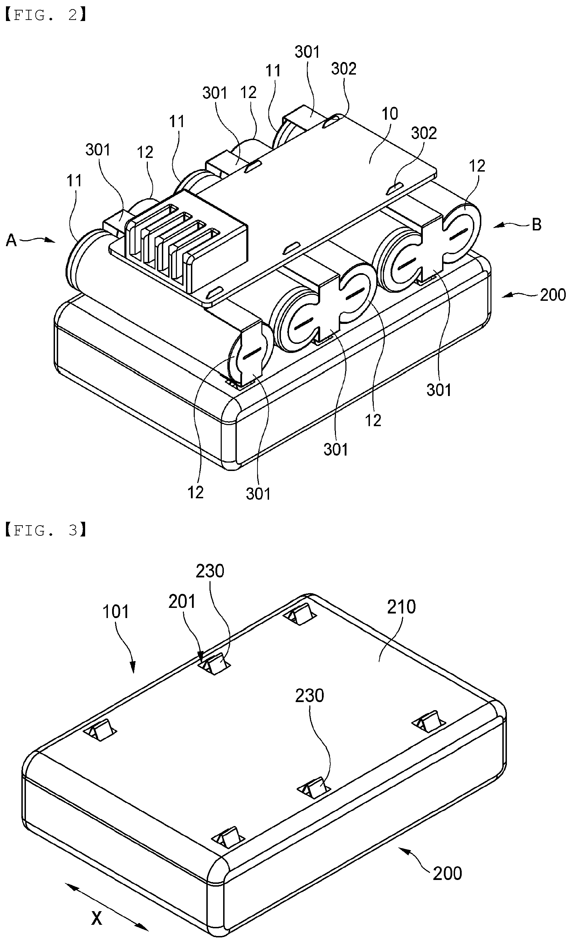

FIG. 1 is a perspective view of a modular battery pack according to the present invention, FIG. 2 is a perspective view of a modular battery pack according to a first embodiment with a case of a base pack removed, and FIG. 3 is a perspective view of an add-on pack in the modular battery pack according to the first embodiment. The add-on pack of FIG. 3 may also be utilized as an add-on pack of a modular battery pack according to a second embodiment, a description of which will follow.

Referring to FIGS. 1 to 3, the modular battery pack according to the present invention includes a base pack 100 equipped with a battery pack connector 110 configured to function as a terminal of the battery pack and an add-on pack 200 coupled to the base pack 100 in order to increase the capacity of the battery pack.

The battery pack connector 110 is disposed on a first surface 101 of the base pack 100, which is an upper surface, the battery pack connector 110 is electrically connected to a coupling terminal of the base pack 100 in a pack case 210, and the base pack 100 and the add-on pack 200 are electrically connected to each other in parallel, whereby the battery pack connector 110 functions as a terminal of the entirety of the battery pack. That is, the battery pack connector 110 may function as at least one of an external input/output terminal, a power terminal, and a communication terminal.

In each of the base pack 100 and the add-on pack 200, cylindrical battery cells 10 are arranged in tight contact with each other, and adjacent cylindrical battery cells 10 are alternately arranged such that a direction in which a cap assembly 11 faces and a direction in which a can bottom 12 faces are opposite each other.

A busbar 301 is coupled to electrode terminals of the cylindrical battery cells 10, and a plurality of cylindrical battery cells 10 is connected to each other in series via the busbar 301.

The other end 302 of the busbar 301 coupled to the electrode terminals of the cylindrical battery cells 10 is bent so as to extend through the pack case 210 of the add-on pack 200, as shown in FIG. 3, and the add-on pack 200 has a through-hole 201 formed in an upper surface of the pack case 210, whereby the other end 302 of the busbar 301, which is bent, may protrude out of the pack case 210 through the through-hole 201.

In the case of the base pack 100, a BMS may be disposed on an upper surface of the cylindrical battery cell 10, and the BMS may be connected to the battery pack connector 110. The other end 302 of the busbar 301 coupled to the electrode terminal of the cylindrical battery cell 10 received in the base pack, which is bent to the first surface 101, which is an upper surface, is connected to the BMS 120 in the pack case 210. Since no through-hole is formed in the first surface 101 of the pack case 210 of the base pack 100, a configuration in which the coupling terminal is exposed through the through-hole is not included; however, at a second surface of the base pack 100, which is an outer surface opposite the first surface 101, a coupling terminal of the base pack 100 may be exposed at a position corresponding to a through-hole 201 and a coupling terminal 230 formed at the first surface 101 of the add-on pack 200 shown in FIG. 3, and may be in contact with the coupling terminal 230 in an overlapping fashion in an upward-downward direction.

Accordingly, the coupling terminal protruding from the second surface of the pack case 210 of the base pack 100 is configured to be in contact with the coupling terminal 230 of the add-on pack 200 located under the base pack 100 between the same polarities, whereby the base pack 100 and the add-on pack 200 are connected to each other in parallel.

In the base pack 100, the other end 302 of the busbar 301 is connected to the BMS 120 to enable measurement of voltage or current at each terminal. In the base pack 100, first and last parts of series connection of the other end 302 of the busbar 301 are connected to the external battery pack connector 110 of the entire battery pack.

The busbar 301 may protrude outward from the pack case 210 through the through-hole 201 of the pack case 210 so as to function as a coupling terminal. Alternatively, a separate coupling terminal 230 may be coupled to the other end 302 of the busbar 301, which is bent, and the coupling terminal 230 may be disposed so as to extend through the through-hole 201 of the pack case 210.

In the base pack 100, the other end 302 of the busbar, which is bent to the first surface of the pack case 210, may be bent upward, as shown in FIG. 2, or may not be bent upward so as to come into face-to-face contact with a lower surface of the BMS.

The through-hole 201 may be formed in the pack case 210 adjacent to the other end 302 of the busbar 301, which is bent, and the busbar 301 is disposed between two cylindrical battery cells 10, wherein the position of the through-hole corresponding to the other end 302 of the busbar coupled to the end of a first side A of the cylindrical battery cell and the position of the through-hole corresponding to the other end 302 of the busbar coupled to the end of a second side B of the cylindrical battery cell are disposed so as to mismatch in direction X of FIG. 3.

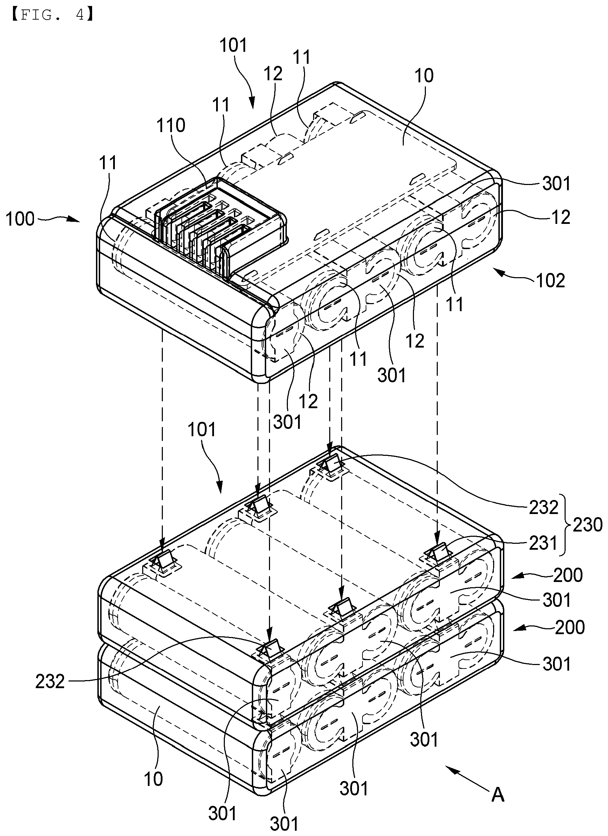

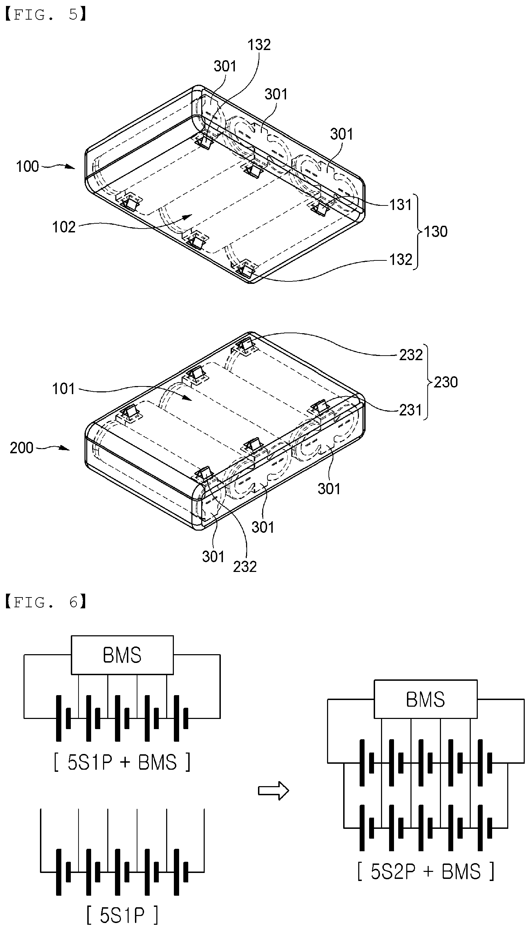

FIG. 4 is an exploded perspective view of a modular battery pack according to a second embodiment, and FIG. 5 is an exploded perspective view showing coupling terminals of the base pack and the add-on pack according to the first embodiment.

Referring to FIG. 4, the modular battery pack according to the second embodiment is configured to have a structure in which an add-on pack 200 is further added to the lowermost end of the modular battery pack according to the first embodiment, and therefore a description of the base pack and the add-on pack of the first embodiment may be equally applied to the modular battery pack according to the second embodiment.

The modular battery pack according to the second embodiment includes a base pack 100 having received therein two or more cylindrical battery cells 10 connected to each other in series, the base pack being formed in an overall cuboidal shape, and at least one add-on pack 200 having received therein two or more cylindrical battery cells 10 connected to each other in series, the add-on pack being formed in an overall cuboidal shape. FIG. 4 shows two add-on packs 200.

The cylindrical battery cells 10 are disposed side by side in parallel in each of the base pack 100 and the add-on pack 200, and cylindrical side surfaces of the cylindrical battery cells 10 face a first surface 101 and a second surface 102 of each of the base pack 100 and the add-on pack 200. In addition, each of the base pack 100 and the add-on pack 200 is disposed such that the side surfaces of the cylindrical battery cells 10 face each other.

The number of the cylindrical battery cells 10 received in the base pack 100 may be equal to the number of the cylindrical battery cells 10 received in the add-on pack 200, and therefore the base pack 100 and the add-on pack 200 may have the same area in a stacking direction.

The cylindrical battery cells 10 are disposed in parallel in each of the base pack 100 and the add-on pack 200, and adjacent cylindrical battery cells 10 are disposed such that a cap assembly 11 and a can bottom 12 face in opposite directions. That is, when viewed in direction A, the adjacent cylindrical battery cells 10 are disposed such that the cap assembly 11 and the can bottom 12 are alternately repeated.

In this state, the cylindrical battery cells 10 are connected to each other in series, wherein the cylindrical battery cells 10 are connected to each other in series via a busbar 301 in each of the base pack 100 and the add-on pack 200. Specifically, the busbar 301, which is configured to allow the cylindrical battery cells 10 to be connected to each other in series therethrough, may be coupled so as to connect the cap assembly 11 and the can bottom 12 of neighboring cylindrical battery cells to each other, whereby electrical connection may be formed.

The cylindrical battery cells 10 are connected to each other in series in a pack case of each of the base pack 100 and the add-on pack 200, and only the busbar 301 for electrical connection to the outside or coupling terminals 130 and 230 coupled to the busbar 301 protrude outward.

The number of the add-on pack packs coupled to the base pack may be set in consideration of the capacity and usage time of an energy source required by a device in which the battery pack is used, and the base pack 100 and the add-on pack packs 200 may be connected to each other in parallel to increase the overall capacity of the battery pack.

In a basic design process, the number of cylindrical battery cells to be connected to each other in series may be determined by first setting desired voltage. In an embodiment of the present invention, both the base pack and the add-on pack have i) only series-connection configurations therein and ii) the same number of cylindrical battery cells.
i) In the case of the base pack, the cylindrical battery cells connected to each other in series therein may be connected to each other in parallel again. When applied to FIG. 4, a base pack 100 including five cylindrical battery cells and two add-on packs 200 each including five cylindrical battery cells may be stacked to manufacture a three-layered battery pack.
ii) Although FIG. 4 shows that each of the base pack and the add-on pack includes five cylindrical battery cells, the number of cylindrical battery cells may be increased to constitute a large-capacity base pack or a large-capacity add-on pack, as needed. In this case, it is preferable for the cylindrical battery cells to be connected to each other in series in each of the base pack and the add-on pack and to be connected to each other in parallel between the base pack and the add-on pack. When applied to FIG. 4, the cylindrical battery cells may be increased in multiples of 5, such as 5, 10, 15, 20, and 25, by increasing the number of add-on packs coupled to the base pack.

In order to charge and discharge the entire battery pack, a battery pack connector 110 configured to function as a terminal of the entirety of the battery pack and a BMS 120 configured to manage the battery pack may be added to the base pack 100.

Each of the base pack 100 and the add-on pack 200 includes a first surface 101 and a second surface 102 that face side surfaces of the cylindrical battery cells 10 therein. Throughout this specification, the first surface 101 refers to an upper surface of each of the base pack 100 and the add-on pack 200, and the second surface 102 refers to a lower surface of each of the base pack 100 and the add-on pack 200.

The battery pack connector 110 and the BMS 120 are disposed at the first surface 101 of the base pack 100, and the first surface 101 of the add-on pack 200 is disposed so as to face the second surface 102 of the base pack 100.

When two or more add-on packs 200 are connected, the two or more add-on packs are stacked such that a first surface 101 of a new add-on pack 200 faces the second surface 102 of the already disposed add-on pack 200.

In this case, coupling terminals 130 and 230 for electrical parallel connection are disposed at the second surface 102 of the base pack 100 and the first surface 101 and second surface 102 of the add-on pack 200.

Referring back to FIG. 4, the five cylindrical battery cells are received in the add-on pack 200, and six coupling terminals 230 are disposed at the first surface 101 of the add-on pack. The coupling terminals 230 may include two distal terminals 232 located at the outermost ends of series connection and four intermediate terminals 231 excluding the distal terminals.

The stacked add-on packs 200 are disposed such that the coupling terminals 230 protruding outward from the pack case are in tight contact with each other or in contact with each other in the upward-downward direction, wherein the distal terminal 232 protruding from the second surface of the add-on pack 200 located above may contact the distal terminals 232 protruding from the first surface of the add-on pack 200 located below, and the intermediate terminal 231 protruding from the second surface of the add-on pack 200 located above may contact the intermediate terminal protruding from the first surface of the add-on pack 200 located below, whereby electrical connection may be formed. Consequently, parallel connection may be formed between the two distal terminals 232.

In the case of FIG. 4, since the two distal terminals 232 and the four intermediate terminals 231 are connected to the busbar 301 coupled to the electrode terminals of the cylindrical battery cells 10, all of the cylindrical battery cells 10 are electrically connected to each other via the distal terminals 232 and the intermediate terminals 231.

The two distal terminals 232 and the four intermediate terminals 231 must be disposed on the first surface 101 and the second surface 102 in the same shape at the same positions in order to form continuous parallel connection in the state in which a plurality of add-on packs is stacked.

Although not shown in FIG. 4, a separate terminal may be added to each of the first surface 101 and the second surface 102 in order to measure the voltage of each of the cylindrical battery cells 10 in each of the base pack 100 and the add-on pack 200. The terminal is not intended to supply power and is for voltage measurement purposes only, and may be different in width or thickness from the two distal terminals 232 and the four intermediate terminals 231. In addition, although not shown in the figure, a terminal configured to transmit the voltage measurement result to the BMS 120 of the base pack 100 may be provided separately from the coupling terminals 130 and 230. If no separate voltage measurement configuration is added to each of the add-on packs 200, the battery cells 10 in the add-on packs 200 may be connected to the BMS 120 of the base pack 100 via the coupling terminals 130 and 230, whereby the BMS of the base pack may measure the voltage of the base pack and the add-on pack connected thereto.

When the add-on pack 200 includes a first add-on pack directly connected to the base pack 100, and a second add-on pack coupled to the first add-on pack under the first add-on pack, a coupling terminal 230 for electrical connection with the base pack 100 is located at a first surface 101 of the first add-on pack, and a coupling terminal 230 for electrical connection with the second add-on pack is located at a second surface of the first add-on pack. The coupling terminal 130 located at the second surface 102 of the base pack 100 and the coupling terminal 230 located at the first surface of the first add-on pack are in physical contact with each other to form electrical parallel connection. The BMS 120 located at the first surface 101 of the base pack 100 may be electrical connected to all of the cylindrical battery cells 10 in the base pack 100, whereby an electrical connection structure between the cylindrical battery cells 10 and the BMS 120 and the battery pack connector 110 may be formed at the first surface 101 of the base pack 100.

Coupling terminals 230 for electrical connection with the first add-on pack located thereabove and another add-on pack located thereunder are located at the first surface and the second surface of the second add-on pack, wherein the coupling terminal 230 located at the second surface of the first add-on pack and the coupling terminal 230 located at the first surface of the second add-on pack may be in physical contact with each other to form electrical parallel connection.

Referring to FIG. 5, a coupling terminal 130 including two distal terminals 132 and four intermediate terminals 131 is located at the second surface 102 of the base pack 100, which is a lower surface, and a coupling terminal 230 including two distal terminals 232 and four intermediate terminals 231 is located at the first surface 101 of the add-on pack 200, which is an upper surface.

When the base pack 100 and the add-on pack 200 are stacked so as to overlap each other, the distal terminals 132 of the base pack 100 come into tight contact with the distal terminals 232 of the add-on pack 200, and the intermediate terminals 131 of the base pack 100 come into tight contact with the intermediate terminals 231 of the add-on pack.

The coupling terminal 130 of the base pack 100 and the coupling terminal 230 of the add-on pack 200 may protrude outward. When the distal terminal 132 has a plate-shaped structure, the distal terminal 232 may have at least one of a leaf spring shape, a ring spring shape, and a blade-clip shape, and when the distal terminal 132 has at least one of a leaf spring shape, a ring spring shape, and a blade-clip shape, the distal terminal 232 may have a plate-shaped structure.

The relationship between the intermediate terminal 131 and the intermediate terminal 231 may be identical to the relationship between the distal terminal 132 and the distal terminal 232.

The coupling terminal 130 located at the second surface 102 of the base pack 100 of FIG. 5 may be identical in shape to the coupling terminal 230 located at the second surface 102 of the add-on pack 200. Thus, even on a stacking plane where two add-on packs 200 are stacked, the coupling terminals 230 of the add-on packs 200 may be arranged so as to be in contact with each other to form electrical connection.

Physical coupling between the base pack 100 and the add-on pack 200 and physical coupling between the add-on packs 200 may be formed only by coupling between the coupling terminals 130 and 230.

Although not shown in FIG. 5, a detachable member configured to further physically couple the base pack 100 and the add-on pack 200 to each other may be disposed at the second surface 102 of the base pack 100 and the first surface 101 and the second surface 102 of the add-on pack 200.

For example, when a spring is used as the detachable member configured to allow the base pack 100 and the add-on pack 200 to be coupled to or separated from each other therethrough, a configuration in which the spring is compressively deformed to couple the base pack 100 and the add-on pack 200 to each other and is decompressed to separate the base pack 100 and the add-on pack 200 from each other may be used. Alternatively, a lever structure or a fixing hook may be as the detachable member such that the base pack 100 and the add-on pack 200 cannot be easily separated from each other.

The detachable member is preferably disposed at the first surface 101 and the second surface 102, and may be disposed separately at side surfaces of the base pack 100 and the add-on pack 200. In addition, the base pack and the add-on pack may be coupled to each other as a whole and may then be separately fixed such that the exteriors of the base pack and the add-on pack are entirely wrapped.

In a specific example, when cylindrical battery cells are disposed in series, on the assumption that the terminals located at opposite ends thereof are represented by V- and V+, a battery pack (1S Pack) including a single cylindrical battery cell requires two terminals V- and V+.

FIG. 6 is a circuit diagram of the modular battery pack according to the first embodiment.

In another embodiment, referring to FIG. 6, 5S1P means that five battery cells are connected to each other in series to constitute one parallel connection unit.

For a battery pack (5S Pack) constituted by five cylindrical battery cells connected to each other in series, six terminals V- (=V0), V1, V2, V3, V4, and V+ (=V5) are required. In FIG. 6, 5S1P connection above may be configured for a base pack, and all battery cells are connected to a BMS in parallel. 5S1P connection below may be configured for an add-on pack, and all battery cells are connected to a series circuit in parallel. Consequently, in a circuit diagram, in which the base pack and the add-on pack are coupled to each other, located at the right side, all of the battery cells are substantially connected to each other in parallel and in series.

In this configuration, the resistance of the base pack and the add-on pack may be measured even though a single BMS is applied, and a battery pack with lower resistance may be manufactured.

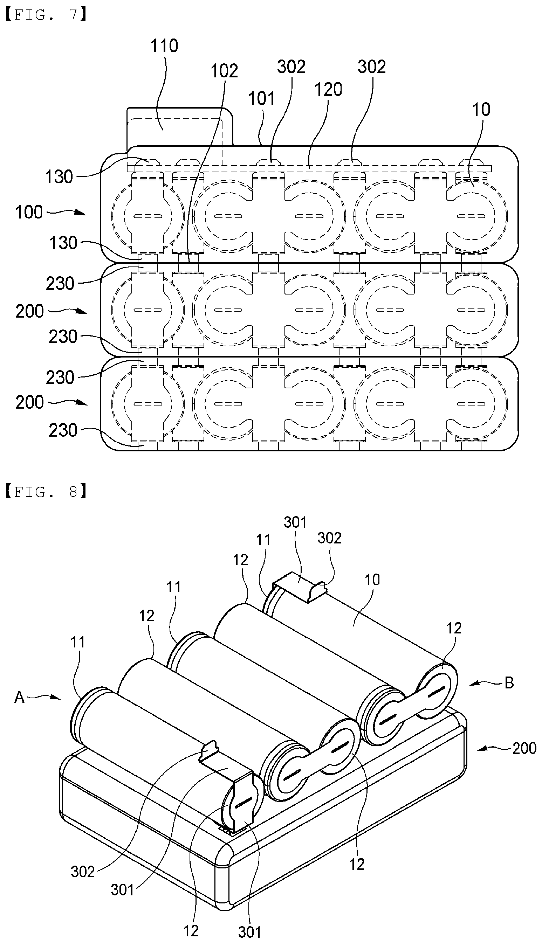

FIG. 7 is a see-through sectional view in direction A of FIG. 4.

Referring to FIG. 7, a base pack 100 and two add-on packs 200 are stacked and configured to have the same horizontal planar sizes. Thus, the base pack 100 and the add-on packs 200 are stacked in an overlapping state such that outer peripheries thereof coincide with each other in a stacking direction.

A coupling terminal 130 is located at a second surface 1023 of the base pack 100, and coupling terminals 230 are located at a first surface and a second surface of each of the add-on packs 200 so as to coincide in position with the coupling terminal 130. The coupling terminal 130 of the base pack 100 and the coupling terminal 230 of the add-on pack 200 are disposed in tight contact with each other and are physically and electrically connected to each other, and the coupling terminals 230 of the add-on packs are disposed in tight contact with each other and are physically and electrically connected to each other.

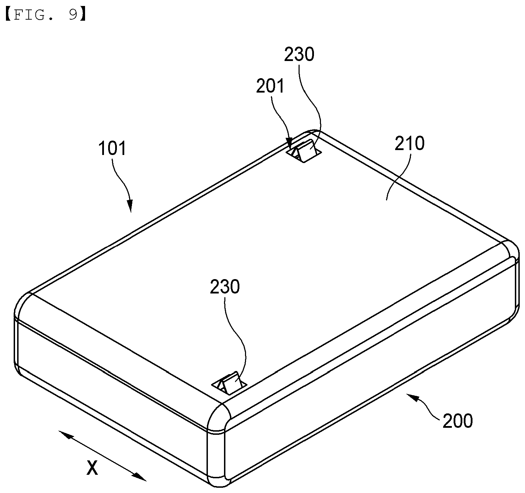

FIG. 8 is a perspective view of a modular battery pack according to a third embodiment with a case of a base pack removed, and FIG. 9 is a perspective view of an add-on pack in the modular battery pack according to the third embodiment.

Referring to FIGS. 8 and 9, when comparing the modular battery pack according to the third embodiment with the modular battery packs according to the first and second embodiments, the modular battery pack according to the third embodiment is identical to the modular battery packs according to the first and second embodiments in that the base pack disposed on the add-on pack 200 is configured such that five cylindrical battery cells 10 received therein are connected to each other in series via a busbar 301, but the modular battery pack according to the third embodiment is different from the modular battery packs according to the first and second embodiments in that only the other ends 302 of opposite end busbars 301 constituting series connection of the cylindrical battery cells 10 are bent upward.

Furthermore, in the add-on pack 200 of the modular battery pack according to the third embodiment, two through-holes 201 are formed in a first surface 101 of a pack case 210, and a coupling terminal 230 protrudes through each through-hole 201, which is in the form of having only distal terminals without intermediate terminals.

The configuration of the through-holes 201 and the coupling terminals 230 formed at the first surface of the add-on pack 200 shown in FIG. 9 may be equally applied to through-holes 201 and coupling terminals 230 formed at a second surface of the base pack of the modular battery pack according to the third embodiment.

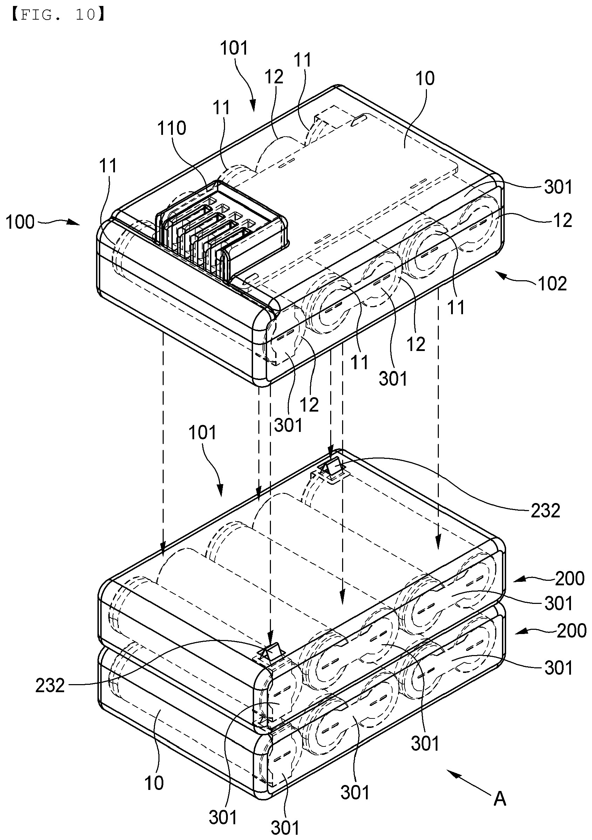

In addition, FIG. 10 is an exploded see-through perspective view of a modular battery pack according to a fourth embodiment, wherein the add-on pack 200 shown in FIG. 9 may constitute an add-on pack of the modular battery pack according to the fourth embodiment shown in FIG. 10.

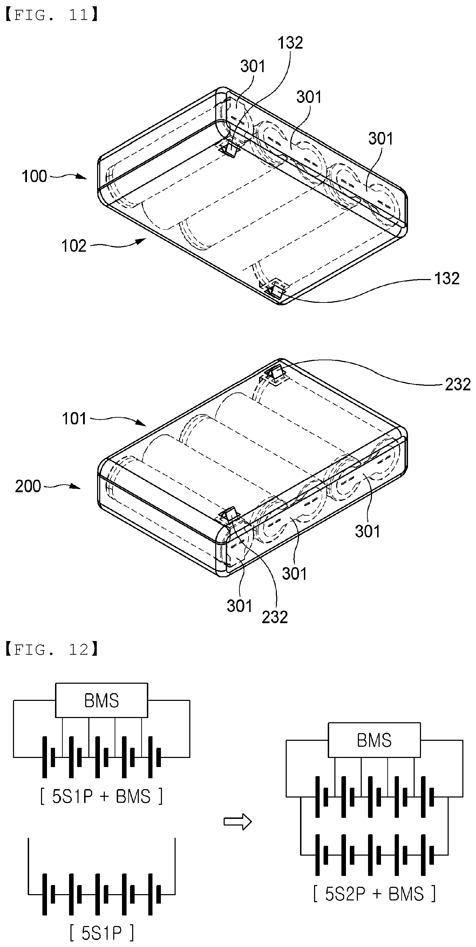

FIG. 11 is an exploded see-through perspective view showing coupling terminals of the base pack and the add-on pack according to the fourth embodiment, and FIG. 12 is a circuit diagram of the modular battery pack according to the fourth embodiment.

Referring to FIGS. 11 and 12, the modular battery pack according to the fourth embodiment is configured to have a structure in which an add-on pack 200 is further added to the lowermost end of the modular battery pack according to the third embodiment, and therefore a description of the base pack and the add-on pack of the third embodiment may be equally applied to the modular battery pack according to the fourth embodiment.

Since each of the modular battery packs according to the third and fourth embodiments is configured such that the coupling terminal 230 exposed out of the pack case is constituted by two distal terminals 232, the battery cells disposed in the base pack 100 are not connected to the battery cells disposed in the add-on pack 200 in parallel, and the battery cells disposed in the add-on pack 200 are not connected to the battery cells disposed in the other add-on pack 200 in parallel.

However, one of the distal terminals of the base pack 100, which is a positive electrode, is coupled to one of the distal terminals of the add-on pack 200, which is a positive electrode, the other of the distal terminals of the base pack 100, which is a negative electrode, is coupled to the other of the distal terminals of the add-on pack 200, which is a negative electrode, and the positive electrode and the negative electrode constituting the distal terminals of the add-on pack 200 are coupled to a positive electrode and a negative electrode constituting distal terminals of the other add-on pack 200, respectively, whereby parallel connection is formed between the base pack and the add-on pack and between the add-on packs.

Referring to FIG. 12, 5S1P connection above may be configured for a base pack, and all battery cells are connected to a BMS in parallel. 5S1P connection below may be configured for an add-on pack, and all battery cells constitute a series circuit. Consequently, in a circuit diagram, in which the base pack and the add-on pack are coupled to each other, located at the right side, the base pack and the add-on pack are connected to each other in parallel, and all of the battery cells in the base pack are connected to the BMS in parallel, whereby the BMS may measure the voltage of each of the battery cells in the add-on pack.

Unlike what is shown in FIG. 12, the BMS may be configured to be coupled to only opposite ends of the battery cells constituting the base pack.

In addition, a description of the modular battery packs according to the first and second embodiments may be equally applied to the modular battery packs according to the third and fourth embodiments.

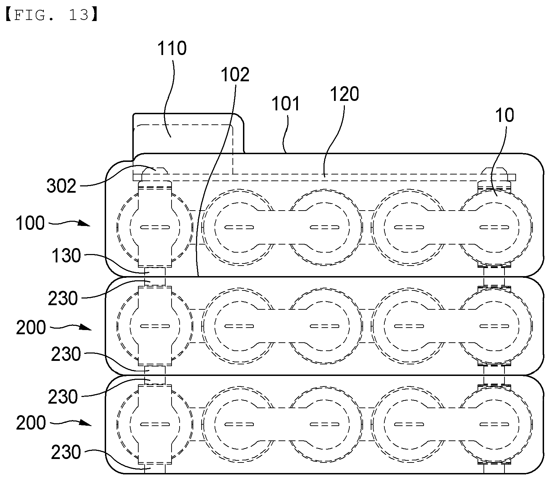

FIG. 13 is a see-through sectional view in direction A of FIG. 10.

Referring to FIG. 13, the BMS 120 is located at an upper part of the base pack 100, wherein the other end 302 of the busbar connected to the cylindrical battery cells 10 in the base pack 100 is disposed so as to extend through the BMS 120 and is coupled to the BMS 120.

Two coupling terminals 130 formed at the second surface 102 of the base pack 100 are stacked so as to contact two coupling terminals 230 formed at the first surface of the add-on pack 200, and the add-on packs 200 are disposed such that the coupling terminals 230 are in contact with each other at opposing surfaces thereof to form parallel connection, whereby electrical connection may be formed between the base pack 100 and the one or more add-on packs 200.

As such, the battery pack according to the present invention includes one base pack and one or more add-on packs, and is configured to have a structure in which add-on packs can be theoretically continuously coupled to each other without limit to number, whereby it is possible to provide a large-capacity battery pack in a simple and easy way in consideration of required capacity and usage time of a power tool.

Those skilled in the art to which the present invention pertains will appreciate that various applications and modifications are possible within the category of the present invention based on the above description.

### (Description of Reference Symbols)

- 10:: Cylindrical battery cell
- 11:: Cap assembly
- 12:: Can bottom
- 100:: Base pack
- 101:: First surface
- 102:: Second surface
- 110:: Battery pack connector
- 120:: BMS
- 130, 230:: Coupling terminals
- 131, 231:: Intermediate terminals
- 132, 232:: Distal terminals
- 200:: Add-on pack
- 201:: Through-hole
- 210:: Pack case
- 301:: Busbar
- 302:: Other end
- A:: First side
- B:: Second side

## Claims

1. A modular battery pack comprising:
a base pack (100) having received therein two or more cylindrical battery cells (10) connected to each other in series, the base pack (100) configured in a cuboidal shape overall; and
at least one add-on pack (200) having received therein two or more cylindrical battery cells (10) connected to each other in series, the add-on pack configured in a cuboidal shape overall, wherein
the two or more cylindrical battery cells (10) are disposed side by side in parallel in each of the base pack (100) and the add-on pack (200),
the base pack (100) and the add-on pack (200) are disposed such that side surfaces of the two or more cylindrical battery cells face each other, and
the base pack (100) and the add-on pack (200) are connected to each other in parallel;
wherein the two or more cylindrical battery cells (10) received in each of the base pack (100) and the add-on pack (200) are connected to each other in series via a busbar (301), and
wherein one end of the busbar (301)coupled to electrode terminals of the two or more cylindrical battery cells (10) is bent so as to extend through a pack case of each of the base pack (100)and the add-on pack (200).

2. The modular battery pack according to claim 1, wherein the base pack (100) includes a battery pack connector (110) configured to function as a terminal of an entirety of the modular battery pack and a BMS (120) configured to manage the entirety of the modular battery pack.

3. The modular battery pack according to claim 2, wherein each of the base pack (100) and the add-on pack (200) comprises a first surface (101) and a second surface (102) configured to face the side surfaces of the two or more cylindrical battery cells (10) therein,
wherein the battery pack connector (110) and the BMS (120) are disposed at the first surface (101) of the base pack (100) while the first surface (101) of the add-on pack (200) is disposed so as to face the second surface (102) of the base pack (100), and
wherein when two or more add-on packs (200) are connected, the two or more add-on packs (200) are stacked such that a first surface (101) of an additional add-on pack (200) faces the second surface (102)of the add-on pack (200) which is already disposed.

4. The modular battery pack according to claim 3, wherein coupling terminals (130, 230) for electrical parallel connection of the base pack (100) and the add-on pack (200) are disposed at the second surface (102) of the base pack (100), and at the first surface (101) and the second surface (102) of the add-on pack (200).

5. The modular battery pack according to claim 3, wherein fixing portions for physical coupling of the base pack (100) and the add-on pack (200) are disposed at the second surface (102) of the base pack, and at the first surface (101) and second surface (102)of the add-on pack (200).

6. The modular battery pack according to claim 4, wherein the base pack (100) and the add-on pack (200) are physically coupled to each other via the coupling terminals (130, 230).

7. The modular battery pack according to claim 4, wherein each of the coupling terminals (130, 230) has at least one of a plate-shaped structure, a leaf spring shape, a ring spring shape, and a blade-clip shape.

8. The modular battery pack according to claim 1, wherein the two or more cylindrical battery cells (10) are disposed in parallel in each of the base pack (100) and the add-on pack (200), and
wherein adjacent cylindrical battery cells (10) of the two or more cylindrical battery cells are disposed such that cap assemblies (11) thereof face in opposite directions.

9. The modular battery pack according to claim 1, wherein a number of the two or more cylindrical battery cells (10) received in the base pack (100) and a number of the two or more cylindrical battery cells (10) received in the add-on pack (200) are equal to each other.

10. The modular battery pack according to claim 3, wherein a plurality of add-on packs (200) is coupled to the second surface (102) of the base pack (100) in a parallel connection, and
wherein the plurality of add-on packs (200) are coupled to each other in a parallel connection.

## Patentansprüche

1. Modulares Batteriepack, umfassend:
• ein Basispack (100), in dem zwei oder mehr zylindrische Batteriezellen (10) aufgenommen sind, die miteinander in Reihe geschaltet sind, wobei das Basispack (100) insgesamt in einer Quaderform konfiguriert ist; und
• mindestens ein Zusatzpack (200), in dem zwei oder mehr zylindrische Batteriezellen (10) aufgenommen sind, die miteinander in Reihe geschaltet sind, wobei das Zusatzpack insgesamt in einer Quaderform konfiguriert ist, wobei
• die zwei oder mehr zylindrischen Batteriezellen (10) in jedem von dem Basispack (100) und dem Zusatzpack (200) nebeneinander parallel angeordnet sind,
• das Basispack (100) und das Zusatzpack (200) derart angeordnet sind, dass Seitenflächen der zwei oder mehr zylindrischen Batteriezellen einander zugewandt sind, und
• das Basispack (100) und das Zusatzpack (200) miteinander parallel geschaltet sind;
• wobei die zwei oder mehr zylindrischen Batteriezellen (10), die in jedem von dem Basispack (100) und dem Zusatzpack (200) aufgenommen sind, über eine Sammelschiene (301) miteinander in Reihe geschaltet sind, und
• wobei ein Ende der Sammelschiene (301), das mit Elektrodenanschlüssen der zwei oder mehr zylindrischen Batteriezellen (10) gekoppelt ist, so gebogen ist, dass es sich durch ein Packgehäuse von jedem von dem Basispack (100) und dem Zusatzpack (200) erstreckt.

2. Modulares Batteriepack nach Anspruch 1, wobei das Basispack (100) einen Batteriepack-Steckverbinder (110), der so konfiguriert ist, dass er als ein Anschluss einer Gesamtheit des modularen Batteriepacks fungiert, und ein BMS (120) aufweist, das so konfiguriert ist, dass es die Gesamtheit des modularen Batteriepacks verwaltet.

3. Modulares Batteriepack nach Anspruch 2, wobei jedes von dem Basispack (100) und dem Zusatzpack (200) eine erste Fläche (101) und eine zweite Fläche (102) umfasst, die so konfiguriert sind, dass sie den Seitenflächen der zwei oder mehr zylindrischen Batteriezellen (10) darin zugewandt sind,
• wobei der Batteriepack-Steckverbinder (110) und das BMS (120) an der ersten Fläche (101) des Basispacks (100) angeordnet sind, während die erste Fläche (101) des Zusatzpacks (200) so angeordnet ist, dass sie der zweiten Fläche (102) des Basispacks (100) zugewandt ist, und
• wobei, wenn zwei oder mehr Zusatzpacks (200) verbunden sind, die zwei oder mehr Zusatzpacks (200) derart gestapelt sind, dass eine erste Fläche (101) eines zusätzlichen Zusatzpacks (200) der zweiten Fläche (102) des bereits angeordneten Zusatzpacks (200) zugewandt ist.

4. Modulares Batteriepack nach Anspruch 3, wobei Kopplungsanschlüsse (130, 230) zur elektrischen Parallelschaltung des Basispacks (100) und des Zusatzpacks (200) an der zweiten Fläche (102) des Basispacks (100) und an der ersten Fläche (101) und der zweiten Fläche (102) des Zusatzpacks (200) angeordnet sind.

5. Modulares Batteriepack nach Anspruch 3, wobei Befestigungsabschnitte zur physischen Kopplung des Basispacks (100) und des Zusatzpacks (200) an der zweiten Fläche (102) des Basispacks und an der ersten Fläche (101) und der zweiten Fläche (102) des Zusatzpacks (200) angeordnet sind.

6. Modulares Batteriepack nach Anspruch 4, wobei das Basispack (100) und das Zusatzpack (200) über die Kopplungsanschlüsse (130, 230) physisch miteinander gekoppelt sind.

7. Modulares Batteriepack nach Anspruch 4, wobei jeder der Kopplungsanschlüsse (130, 230) mindestens eine von einer plattenförmigen Struktur, einer Blattfederform, einer Ringfederform und einer Klingen-Clip-Form aufweist.

8. Modulares Batteriepack nach Anspruch 1,
• wobei die zwei oder mehr zylindrischen Batteriezellen (10) in jedem von dem Basispack (100) und dem Zusatzpack (200) parallel angeordnet sind, und
• wobei benachbarte zylindrische Batteriezellen (10) der zwei oder mehr zylindrischen Batteriezellen so angeordnet sind, dass Kappenbaugruppen (11) davon in entgegengesetzte Richtungen weisen.

9. Modulares Batteriepack nach Anspruch 1, wobei eine Anzahl der zwei oder mehr zylindrischen Batteriezellen (10), die in dem Basispack (100) aufgenommen sind, und eine Anzahl der zwei oder mehr zylindrischen Batteriezellen (10), die in dem Zusatzpack (200) aufgenommen sind, einander gleich sind.

10. Modulares Batteriepack nach Anspruch 3,
• wobei eine Vielzahl von Zusatzpacks (200) mit der zweiten Fläche (102) des Basispacks (100) in einer Parallelschaltung gekoppelt ist, und
• wobei die Vielzahl von Zusatzpacks (200) miteinander in einer Parallelschaltung gekoppelt sind.

## Revendications

1. Bloc-batterie modulaire comprenant :
un bloc de base (100) ayant reçu à l'intérieur de celui-ci deux cellules de batterie cylindriques (10) ou plus connectées les unes aux autres en série, le bloc de base (100) étant configuré sous une forme cuboïde globale ; et
au moins un bloc d'extension (200) ayant reçu à l'intérieur de celui-ci deux cellules de batterie cylindriques (10) ou plus connectées les unes aux autres en série, le bloc d'extension étant configuré sous une forme cuboïde globale, dans lequel
les deux cellules de batterie cylindriques (10) ou plus sont disposées côte à côte en parallèle dans chacun du bloc de base (100) et du bloc d'extension (200),
le bloc de base (100) et le bloc d'extension (200) sont disposés de sorte que des surfaces latérales des deux cellules de batterie cylindriques ou plus se font face, et
le bloc de base (100) et le bloc d'extension (200) sont connectés l'un à l'autre en parallèle ;
dans lequel les deux cellules de batterie cylindriques (10) ou plus reçues dans chacun du bloc de base (100) et du bloc d'extension (200) sont connectées les unes aux autres en série via une barre omnibus (301), et
dans lequel une extrémité de la barre omnibus (301) couplée à des bornes d'électrode des deux cellules de batterie cylindriques (10) ou plus est pliée de manière à s'étendre à travers un boîtier de bloc de chacun du bloc de base (100) et du bloc d'extension (200).

2. Bloc-batterie modulaire selon la revendication 1, dans lequel le bloc de base (100) comprend un connecteur de bloc-batterie (110) configuré pour fonctionner comme une borne de l'intégralité du bloc-batterie modulaire et un BMS (120) configuré pour gérer l'intégralité du bloc-batterie modulaire.

3. Bloc-batterie modulaire selon la revendication 2, dans lequel chacun du bloc de base (100) et du bloc d'extension (200) comprend une première surface (101) et une seconde surface (102) configurées pour faire face aux surfaces latérales des deux cellules de batterie cylindriques (10) ou plus à l'intérieur de celui-ci,
dans lequel le connecteur de bloc-batterie (110) et le BMS (120) sont disposés au niveau de la première surface (101) du bloc de base (100) tandis que la première surface (101) du bloc d'extension (200) est disposée de manière à faire face à la seconde surface (102) du bloc de base (100), et
dans lequel, lorsque deux blocs d'extension (200) ou plus sont connectés, les deux blocs d'extension (200) ou plus sont empilés de sorte qu'une première surface (101) d'un bloc d'extension (200) supplémentaire fait face à la seconde surface (102) du bloc d'extension (200) qui est déjà disposé.

4. Bloc-batterie modulaire selon la revendication 3, dans lequel des bornes de couplage (130, 230) pour une connexion électrique en parallèle du bloc de base (100) et du bloc d'extension (200) sont disposées au niveau de la seconde surface (102) du bloc de base (100), et au niveau de la première surface (101) et de la seconde surface (102) du bloc d'extension (200).

5. Bloc-batterie modulaire selon la revendication 3, dans lequel des parties de fixation pour le couplage physique du bloc de base (100) et du bloc d'extension (200) sont disposées au niveau de la seconde surface (102) du bloc de base, et au niveau de la première surface (101) et de la seconde surface (102) du bloc d'extension (200).

6. Bloc-batterie modulaire selon la revendication 4, dans lequel le bloc de base (100) et le bloc d'extension (200) sont couplés physiquement l'un à l'autre via les bornes de couplage (130, 230).

7. Bloc-batterie modulaire selon la revendication 4, dans lequel chacune des bornes de couplage (130, 230) a au moins l'une parmi une structure en forme de plaque, une forme de ressort à lames, une forme de ressort annulaire, et une forme de pince à lame.

8. Bloc-batterie modulaire selon la revendication 1,
dans lequel les deux cellules de batterie cylindriques (10) ou plus sont disposées en parallèle dans chacun du bloc de base (100) et du bloc d'extension (200), et
dans lequel des cellules de batterie cylindriques (10) adjacentes des deux cellules de batterie cylindriques ou plus sont disposées de sorte que des ensembles de capuchon (11) de celles-ci font face dans des directions opposées.

9. Bloc-batterie modulaire selon la revendication 1, dans lequel un nombre des deux cellules de batterie cylindriques (10) ou plus reçues dans le bloc de base (100) et un nombre des deux cellules de batterie cylindriques (10) ou plus reçues dans le bloc d'extension (200) sont égaux.

10. Bloc-batterie modulaire selon la revendication 3,
dans lequel une pluralité de blocs d'extension (200) est couplée à la seconde surface (102) du bloc de base (100) dans une connexion en parallèle, et
dans lequel la pluralité de blocs d'extension (200) sont couplés les uns aux autres dans une connexion en parallèle.
